Europäisches Patentamt

European Patent Office

Office européen des brevets

(11) Numéro de publication: **0 450 385 A1**

## DEMANDE DE BREVET EUROPEEN

(21) Numéro de dépôt: **91104158.0**

(51) Int. Cl.5: **H01S 3/25, G02B 6/42**

(22) Date de dépôt: **18.03.91**

(30) Priorité: **23.03.90 FR 9003755**

(43) Date de publication de la demande:
**09.10.91 Bulletin 91/41**

(84) Etats contractants désignés:
**AT BE CH DE ES FR GB IT LI NL SE**

(71) Demandeur: **ALCATEL CIT**
**12 Rue de la Baume**
**F-75008 Paris(FR)**

(72) Inventeur: **Beylat, Jean-Luc**
**34, avenue de Suffren**
**F-75015 Paris(FR)**
Inventeur: **Pitel, Fabrice, c/o ALCATEL**
**ALSTHOM RECHERCHE**
**Route de Nozay**
**F-91460 Marcoussis(FR)**
Inventeur: **Monnot, Michel**
**50, avenue des Bleuets**
**F-91400 Orsay(FR)**

(74) Mandataire: **Weinmiller, Jürgen et al**
**Lennéstrasse 9 Postfach 24**
**W-8133 Feldafing(DE)**

(54) **Ensemble d'alimentation à amplificateur pour fibre optique.**

(57) Cet ensemble est réalisé sous la forme d'une tête optique intégrant, outre un isolateur optique (6, 8), un amplificateur modulateur de phase à semiconducteur (18). Ce dernier est orienté parallèlement au laser émetteur (2) grâce à la présence d'un compensateur de rotation (14, 15) pour compenser la rotation de polarisation que l'isolateur impose à la lumière de ce laser.

L'invention s'applique notamment aux télécommunications à fibres optiques.

# FIG. 1

La présente invention concerne la transmission d'information par une fibre optique sous la forme d'une modulation d'une onde porteuse optique guidée par cette fibre et notamment sous la forme d'une modulation de la phase de cette onde.

Un ensemble d'alimentation prévu par une telle transmission est décrit dans l'article "Semiconducteur laser optical amplifier as phase modulator in a 140 Mbit/s DPSK transmission experiment"
G. GROSSKOPF
Conf. publ. IOOC'89, Kobe, 1989.

Dans cet ensemble connu, une source lumineuse, isolée de la réalimentation optique, alimente, par l'intermédiaire d'une fibre optique intermédiaire, un amplificateur à semi conducteur qui amplifie l'onde optique et lui applique en même temps la modulation de phase représentative de l'information à transmettre. Cette onde est ensuite injectée dans une fibre de ligne monomodale.

Un tel ensemble présente les inconvénients suivants:

- L'amplificateur-modulateur ne joue son rôle de la manière convenable que s'il reçoit une lumière polarisée selon une direction d'amplification préférentielle qui lui est propre. La fibre optique intermédiaire doit donc être apte à lui transmettre l'onde lumineuse avec cette polarisation et pour cela être apte à maintenir une telle polarisation. C'est-à-dire qu'elle doit présenter une birefringence intrinsèque ou induite qui définit ses directions de maintien de polarisation. Il faut donc d'abord réaliser les couplages de la fibre intermédiaire d'une part à la tête optique et d'autre part à l'amplificateur modulateur. Il faut ensuite ajuster l'une des directions de maintien de polarisation de cette fibre d'une part sur la polarisation de la lumière en sortie de la tête optique, d'autre part sur la direction d'amplification préférentielle de l'amplificateur modulateur. La réalisation d'un tel ensemble est donc délicate.
- L'ensemble présente un encombrement et une fragilité excessives.

Pour pallier ces inconvénients la présente invention vise à réaliser un tel ensemble sous la forme d'une tête optique intégrant non seulement le laser émetteur et l'isolateur optique mais aussi l'amplificateur modulateur. Pour permettre de réaliser une telle tête dans des conditions industrielles, cet amplificateur doit être orienté, en ce qui concerne les directions de polarisation, de manière que sa direction d'amplification préférentielle soit parallèle à la direction de polarisation du laser émetteur. Cela est rendu compatible avec le fait que l'isolateur optique fait tourner la polarisation de la lumière, grâce à l'utilisation d'un compensateur de rotation qui fait tourner cette polarisation en sens inverse.

A l'aide des figures schématiques ci-jointes, on va décrire ci-après comment la présente invention peut être mise en oeuvre, étant entendu que les éléments et dispositions mentionnés et représentés ne le sont qu'à titre d'exemple non limitatif. Lorsqu'un même élément est représenté sur plusieurs figures il y est désigné par le même signe de référence.

La figure 1 représente un schéma de principe d'un ensemble selon la présente invention.

La figure 2 représente la succession des directions de polarisation de la lumière dans cet ensemble.

La figure 3 représente une vue en coupe longitudinale d'une tête optique constituant l'ensemble de la Figure 1.

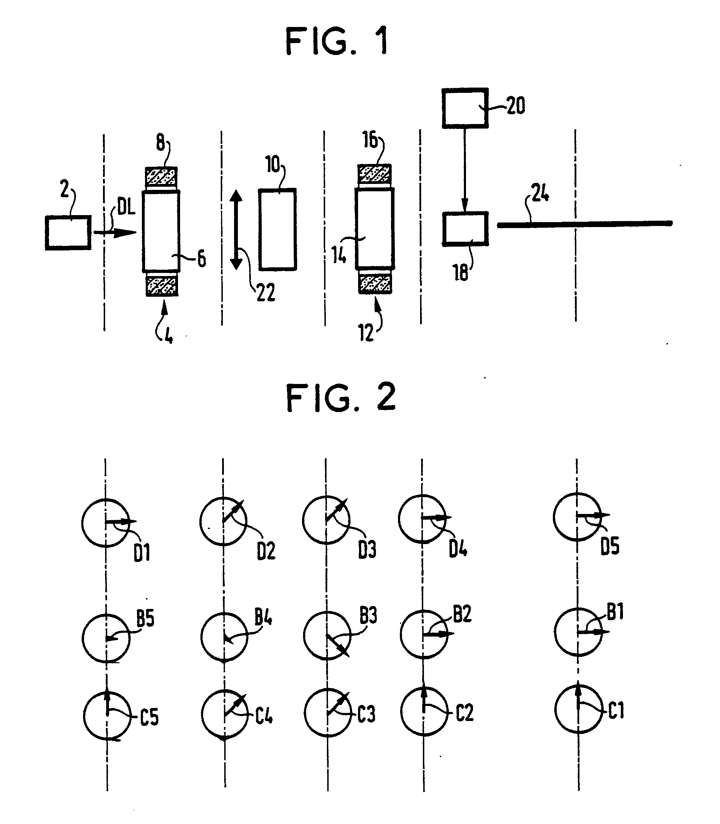

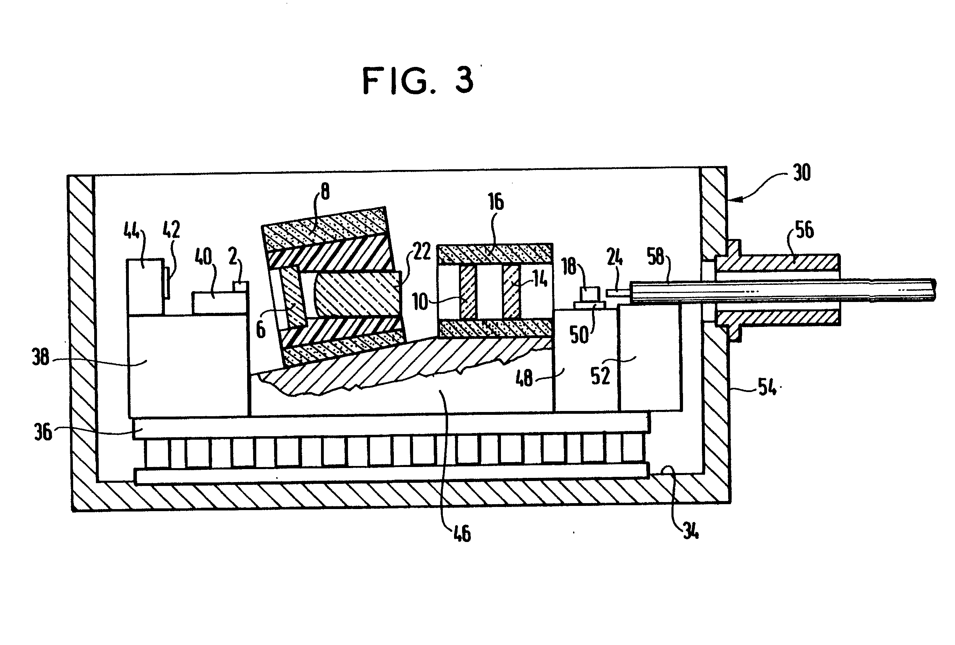

L'ensemble donné en exemple comporte (voir figure 1 et 3)

- Un laser émetteur 2 à semiconducteur pour émettre une lumière qui se propage selon une direction longitudinale DL vers l'avant et qui présente une polarisation selon une première direction transversale D1.
- Un rotateur 4 transmettant cette lumière en faisant tourner sa polarisation de 45 degrés dans un sens de rotation prédéterminé de manière à l'orienter selon une deuxième direction transversale D2. Ce rotateur est constitué d'une lame à effet Faraday 6 placée dans le champ d'un aimant permanent annulaire 8.
- Un polariseur 10 pour transmettre la lumière qui a été transmise par le rotateur 4 et pour arrêter toute composante de lumière polarisée selon une direction perpendiculaire à la deuxième direction transversale. Ce polariseur et le rotateur 4 constituent un isolateur optique empêchant qu'une lumière de retour qui se propagerait vers l'arrière vers cet isolateur puisse atteindre le laser 2 avec une polarisation selon la première direction transversale. Une telle lumière perturberait le fonctionnement de ce laser.
- Un compensateur de rotation 12 constitué comme le rotateur 4 c'est-à-dire par une lame 14 et un aimant 16. Ce compensateur fait tourner la polarisation de la lumière de 45 degrés pour l'orienter à nouveau selon la direction D1.
- Un amplificateur modulateur 18 à semiconducteur présentant une direction d'amplification préférentielle qui est la direction de polarisation de la lumière qui a été transmise par le polariseur 10 vers l'avant. Cet amplificateur amplifie sélectivement la lumière qui présente une telle polarisation. Il lui applique en même temps un déphasage commandé.

- Un organe de commande 20 pour recevoir un signal de modulation et pour commander selon ce signal le déphasage appliqué par l'amplificateur modulateur 18.
- Et des moyens de couplage optique 22 pour que la lumière transmise par ledit amplificateur modulateur soit injectée dans une fibre optique de ligne 24.

Sur la figure 2 les flèches D1 à D5 représentent les directions de polarisation successives de la lumière se propageant vers l'avant. Les flèches B1 à B5 représentent les directions successives de polarisation d'une composante de lumière de retour qui serait susceptible de perturber le fonctionnement du laser émetteur 2, mais qui est arrêtée par le polariseur 10. Cet arrêt est symbolisé par la longueur diminuée des flèches B4 et B5. Les flèches C1 à C5 représentent les directions de polarisation successives d'une autre composante d'une lumière de retour, qui est peu gênante pour le fonctionnement du laser 2.

La direction verticale de cette figure représente la direction verticale des figures 1 et 3. La direction horizontale de la figure 2 représente la direction perpendiculaire au plan des feuilles des figures 1 et 3.

Outre les éléments précédemment décrits la Figure 3 représente le boîtier 30 sur le fond 34 duquel est placé une plaque de régulation thermique 36 comportant des thermoéléments. Cette dernière porte une succession de blocs. Un bloc 38 porte le laser 2 par l'intermédiaire d'une embase laser 40, ainsi qu'une diode de régulation 42 par l'intermédiaire d'une embase de diode 44. Cette diode reçoit de la lumière qui est émise vers l'arrière par le laser 2. Elle permet une régulation du fonctionnement de celui-ci par l'intermédiaire de circuits extérieurs non représentés. Un bloc 46 porte d'abord un sous-ensemble comportant le rotateur 6, 8 et une lentille selfoc 22 constituant lesdits moyens de couplage optique. Il porte ensuite un autre sous-ensemble comportant le compensateur de rotation 14, 16 et le polariseur 10. Les enveloppes extérieures de ces sous-ensembles sont constituées par les aimants annulaires 8 et 16.

La lame 6 est inclinée pour éviter des reflexions perturbatrices vers le laser 2.

Un bloc 48 porte l'amplificateur modulateur 18 par l'intermédiaire d'une embase d'amplificateur 50. Cet amplificateur a une structure interne semblable à celle du laser 2 et leurs montages sur leurs embases 40 et 50 doivent être analogues si on souhaite éviter des difficultés de réalisation qui augmenteraient le coût de l'ensemble. Il en résulte que la direction de polarisation assurant l'amplification préférentielle convenable au sein de l'amplificateur modulateur 18 doit être la direction D1 qui est celle de la polarisation de la lumière émise par le laser 2 et qui est horizontale c'est-à-dire perpendiculaire au plan de la feuille.

Enfin un bloc 52 porte la fibre de ligne 24 dans une position assurant son couplage à l'amplificateur modulateur 18.

Ces divers blocs sont en contact par des faces d'appui transversales.

La paroi avant 54 du boîtier 30 porte en outre des éléments de guidage et de maintien 56 pour la gaine 58 de la fibre 24.

## Revendications

1. Ensemble d'alimentation à amplificateur pour fibre optique réalisé sous la forme d'une tête optique incluant un isolateur optique (6, 8) qui fait tourner la polarisation de la lumière, caractérisé par le fait qu'il inclut aussi un amplificateur modulateur (18) semiconducteur amplifiant préférentiellement la lumière polarisée selon une direction propre à cet amplificateur, cette direction étant orientée parallèlement à la direction de polarisation du laser émetteur (2) grâce à la présence d'un compensateur de rotation (14, 15) qui fait tourner la polarisation de la lumière dans le sens inverse.

2. Ensemble selon la revendication 1 comportant :

   - un laser émetteur (2) à semiconducteur pour émettre une lumière qui se propage selon une direction longitudinale (DL) vers l'avant et qui présente une polarisation selon une première direction transversale (D1),
   - un rotateur (4) transmettant ladite lumière dudit laser en faisant tourner sa polarisation de 45 degrés dans un sens de rotation de ce rotateur de manière à orienter cette polarisation selon une deuxième direction transversale (D2),
   - un polariseur (10) pour transmettre la lumière qui a été transmise par ledit rotateur et pour arrêter toute composante de lumière polarisée selon une direction perpendiculaire à ladite deuxième direction transversale, de manière à constituer avec ce rotateur un isolateur empêchant qu'une lumière de retour qui se propagerait vers l'arrière vers cet isolateur puisse atteindre ledit laser (2) avec une polarisation selon ladite première direction transversale et puisse perturber le fonctionnement de ce laser,
   - un amplificateur (18) à semiconducteur présentant une direction d'amplification préférentielle pour transmettre la lumière qui a été transmise par ledit polariseur vers l'avant avec une polarisation selon ladite direction d'amplification préférentielle, et pour amplifier selectivement la lumière qui présente une telle polarisation,

- et des moyens de couplage optique (22) pour que la lumière transmise par ledit amplificateur soit injectée dans une fibre optique de ligne (24),
- ledit ensemble étant caractérisé par le fait qu'il comporte en outre un compensateur de rotation (12) interposé entre lesdits polariseur (10) et amplificateur (18) pour faire tourner la polarisation de la lumière de 45 degrés dans un sens opposé audit sens de rotation dudit rotateur (4), de manière à orienter ladite direction d'amplification préférentielle parallèlement à ladite première direction transversale, (D1),
- lesdits laser (2), rotateur, polariseur , compensateur de rotation, amplificateur et moyens de couplage optique étant maintenus dans un même boîtier (30),
- ledit boîtier comportant en outre des moyens de maintien (52) pour ladite fibre de ligne (24).

3. Ensemble selon la revendication 2 caractérisé par le fait que ledit amplificateur (18) est un amplificateur modulateur de phase pour appliquer un déphasage à la lumière qu'il amplifie,

- ledit ensemble comportant en outre un organe de commande (20) pour recevoir un signal de modulation et pour commander en réponse ledit déphasage.

# FIG. 1

# FIG. 2

# FIG. 3

EP 0 450 385 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | WO-A-8 909 505 (HUGHES AIRCRAFT)<br>* Figure 4; page 10, lignes 22-36; pages 11-13; page 14, lignes 1-27 *<br>– – – | 1 | H 01 S 3/25<br>G 02 B 6/42 |
| Y | PATENT ABSTRACTS OF JAPAN, vol. 10, no. 247 (P-490)[2303], 26 août 1986;<br>& JP-A-61 77 028 (FUJITSU LTD) 19-04-1986<br>* En entier *<br>– – – | 1 | |
| A | IDEM<br>– – – | 2 | |
| A | PATENT ABSTRACTS OF JAPAN, vol. 12, no. 493 (E-697)[3340], 22 décembre 1988;<br>& JP-A-63 205 983 (NEC CORP.) 25-08-1988<br>* En entier *<br>– – – | 1 | |
| A | PATENT ABSTRACTS OF JAPAN, vol. 12, no. 399 (P-775)[3246], 24 octobre 1988;<br>& JP-A-63 139 318 (FUJITSU LTD) 11-06-1988<br>* En entier *<br>– – – | 1 | **DOMAINES TECHNIQUES RECHERCHES (Int. Cl.5)** |
| A | US-A-3 752 992 (F.R. FLUHR)<br>* Figure 1; revendications *<br>– – – – – | 3 | H 01 S 3/00<br>G 02 B 6/00 |

Le présent rapport de recherche a été établi pour toutes les revendications

| Lieu de la recherche | Date d'achèvement de la recherche | Examinateur |
|---|---|---|
| La Haye | 04 juillet 91 | MATHYSSEK K. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons

& : membre de la même famille, document correspondant